# EUROPEAN PATENT SPECIFICATION

(11) **EP 2 498 454 B1**
(45) Date of publication and mention of the grant of the patent: **23.05.2018**
(21) Application number: 10834243.7
(22) Date of filing: 06.12.2010
(51) Int. Cl.: H04L 12/721, H04L 12/709, H04L 12/803

(54) **METHOD, DEVICE AND SYSTEM FOR PROCESSING SERVICE TRAFFIC BASED ON PSEUDO WIRES**
VERFAHREN, VORRICHTUNG UND SYSTEM ZUR VERARBEITUNG EINES DIENSTVERKEHRS AUF BASIS VON PSEUDODRÄHTEN
PROCÉDÉ, DISPOSITIF ET SYSTÈME DE TRAITEMENT DE TRAFIC DE SERVICE SUR LA BASE DE PSEUDOFILS

(30) Priority: 04.12.2009 CN 200910252928
(43) Date of publication of application: 12.09.2012
(73) Proprietor: Huawei Technologies Co., Ltd., Longgang District Shenzhen, Guangdong 518129 (CN)
(72) Inventor: ZHOU, Peng, Shenzhen Guangdong 518129 (CN); SHI, Tijun, Shenzhen Guangdong 518129 (CN)
(74) Representative: Thun, Clemens
(86) International application number: PCT/CN2010/079475
(87) International publication number: WO 2011/066810

(56) References cited:
- CN-A- 101 572 666
- CN-A- 101 710 877
- US-A1- 2008 037 425
- US-A1- 2008 181 233
- US-A1- 2008 253 381
- Y(J) STEIN I MENDELSOHN R INSLER RAD DATA COMMUNICATIONS: "PW Bonding; draft-stein-pwe3-pwbonding-01.txt", PW BONDING; DRAFT-STEIN-PWE3-PWBONDING-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 2 November 2008 (2008-11-02), XP015059939,
- PRAVEEN MULEY MUSTAPHA AISSAOUI MATTHEW BOCCI PRANJAL KUMAR DUTTA MARC LASSERRE ALCATEL JONATHAN NEWTON CABLE (OEB_ENTITY_AMPERSAN: "Pseudowire (PW) Redundancy; draft-ietf-pwe3-redundancy-02.txt", PSEUDOWIRE (PW) REDUNDANCY; DRAFT-IETF-PWE3-REDUNDANCY-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. pwe3, no. 2, 26 October 2009 (2009-10-26), XP015065254, [retrieved on 2009-10-27]
- LUCA MARTINI (ED) ERIC C ROSEN CISCO SYSTEMS ET AL: "Pseudowire Setup and Maintenance using the Label Distribution Protocol; draft-ietf-pwe3-control-protocol-17.txt", 20050601, vol. pwe3, no. 17, 1 June 2005 (2005-06-01), XP015040861, ISSN: 0000-0004
- PRAVEEN MULEY MUSTAPHA AISSAOUI MATTHEW BOCCI PRANJAL KUMAR DUTTA MARC LASSERRE ALCATEL-LUCENT JONATHAN NEWTON CABLE (OEB_ENTITY_A: "Preferential Forwarding Status bit definition; draft-ietf-pwe3-redundancy-bit-02.txt", PREFERENTIAL FORWARDING STATUS BIT DEFINITION; DRAFT-IETF-PWE3-REDUNDANCY-BIT-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. pwe3, no. 2, 24 October 2009 (2009-10-24), XP015065135, [retrieved on 2009-10-26]
- BOCCI M ET AL: "Network high availability for ethernet services using IP/MPLS networks", IEEE COMMUNICATIONS MAGAZINE, IEEE SERVICE CENTER, PISCATAWAY, US, vol. 45, no. 3, 1 March 2008 (2008-03-01), pages 90-96, XP011205402, ISSN: 0163-6804
- NETWORK WORKING GROUP PREFERENTIAL FORWARDING STATUS BIT DEFINITION: DRAFT-IETF-PWE3-REDUNDANCY-BIT-01.TXT 30 September 2008, XP015058822

## Description

### FIELD OF THE INVENTION

The embodiments of the present invention relate to the technical field of communication, and more particularly, to a method, device and system for processing service traffic based on pseudo wires.

### BACKGROUND OF THE INVENTION

Pseudo Wire Emulation Edge-to-Edge (hereinafter to be referred as PWE3) is a mechanism which emulates the essential attributes of services such as Asynchronous Transport Mode (hereinafter to be referred as ATM), Frame Relay (hereinafter to be referred as FR) and Ethernet on a Packet Switch Network (hereinafter to be referred as PSN). The PWE3 enables an operator to migrate a traditional service onto the PSN, so as to reduce the operating expense (hereinafter to be referred as OPEX).

In order to ensure the high availability of the service, it is necessary to support redundancy at different layers of a network. If a fault occurs in resources in use such as a network node, a link and a channel, it is possible to switch to other redundant available resources, so as to ensure continuous provision of service by the network. A standby pseudo wire (hereinafter to be referred as PW), which is used to protect an active PW in the presence of faults in the active PW, is defined in PW redundancy. There are a plurality of scenes in PW redundancy, for example, Customer Edge (hereinafter to be referred as CE) devices at two ends are in dual-homing access into a Provider Edge (hereinafter to be referred as PE) device; the CE at one end is in dual-homing access into the PE and the CE at the other end is in single-homing access into the PE; the CEs at two ends are in single-homing access into the PEs, with Multi-Session Pseudo Wire (hereinafter to be referred as MS-PW) between the two PEs; a Multi-Tenant Unit (hereinafter to be referred as MTU) is connected with the PE by the PW such as a spoke PW in Hierarchical Virtual Private LAN service (hereinafter to be referred as HVPLS). In these scenes of PW redundancy, a PW is an active PW, and the other PWs are standby PWs.

In order to synchronously switch the PEs at two ends connected by the PW, the Internet Engineering Task Force (hereinafter to be referred as IETF) defines a Type-Length-Value (hereinafter to be referred as TLV) of a status of a Label Distribute Protocol (hereinafter to be referred as LDP) message for transferring a local status of the PW, and introduces a new status: active/standby status, for identifying an active/standby status. The PE selects which PW is active according to the local status and the active/standby status of a distal end. Only the PW whose both two ends are in the active status can forward the traffic. When the PW is operational up and is selected as the PW used for forwarding a service flow, the PW is in the active status; when the PW is operational up but is not selected as the PW used for forwarding the service flow, the PW is in the standby status. When a certain PW is in the active status, it can receive and forward service data and Operation Administration and Maintenance (hereinafter to be referred as OAM) data; when the PW is in the standby status, it can't forward the service data but can forward and receive the OAM data.

The redundant PW corresponding to a service can only be used in the active/standby way. For example, only one active PW can forward the traffic, and the standby PW cannot take full advantage of the network resource in a load sharing manner. The CE dual-homing cannot be used accompanied by the load sharing way, such as Multi-Chassis Link Aggregation Group (hereinafter to be referred as MC-LAG) load sharing.

In the existing PW redundancy technology, the switchover time is long.

US 2008/0253381A1 relates to pseudowire load balancing. In one embodiment, a communications distribution process maintains at least two pseudowires through a network such that the pseudowires share a burden of delivering data through the network. The communications distribution process receives feedback data concerning operation of each pseudowire. The communications distribution process utilizes the feedback data to distribute communications to the common destination across each of the pseudowires. Additionally, the communications distribution process utilizes the feedback to establish at least one new pseudowire, in addition to the first pseudowire and the second pseudowire, for transmission of data traffic.

US 2008/037425A1 discloses binding a control plane to a data plane. Binding includes receiving a request to initiate a session, wherein the request is sent via a Session Initiation Protocol (SIP)-based protocol and transmitting a set of one or more service parameters associated with the request to an edge node configured to participate in the session.

"PW Bonding; draft-stein-pwe3-pwbonding-01.txt" is a working document of the Internet Engineering Task Force (IETF). There are times when pseudowires must be transported over physical links with limited bandwidth. We shall use the term "bonding" (also variously known as inverse multiplexing, link aggregation, trunking, teaming, etc.) to mean an efficient mechanism for separating the PW traffic over several links. Unlike load balancing and equal cost multipath, bonding makes no assumption that the PW traffic can be decomposed into distinguishable flows, and thus bonding requires delay compensation and packet reordering. Furthermore, PW bonding can optionally track bandwidth constraints in order to minimize packet loss.

"Pseudowire (PW) Redundancy; draft-ietf-pwe3-redundancy-02.txt" is a working document of the Internet Engineering Task Force (IETF). This document describes a framework comprised of few scenarios and associated requirements where PW redundancy is needed. A set of redundant PWs is configured between PE nodes in SS-PW applications, or between T-PE nodes in MS-PW applications. In order for the PE/T-PE nodes to indicate the preferred PW path to forward to one another, a new status is needed to indicate the preferential forwarding status of active or standby for each PW in the redundancy set.

"Pseudowire Setup and Maintenance using the Label Distribution Protocol; draft-ietf-pwe3-control-protocol-17.txt" is a working document of the Internet Engineering Task Force (IETF). This document specifies a protocol for establishing and maintaining the pseudowires, using extensions to Label Distribution Protocol (LDP). Procedures for encapsulating layer 2 PDUs are specified in a set of companion documents.

"Preferential Forwarding Status bit definition; draft-ietf-pwe3-redundancy-bit-02.txt" is a working document of the Internet Engineering Task Force (IETF). This document describes a mechanism for standby status signaling of redundant PWs between their termination points. A set of redundant PWs is configured between PE nodes in SS-PW applications, or between T-PE nodes in MS-PW applications. In order for the PE/T-PE nodes to indicate the preferred PW path to forward to one another, a new status bit is needed to indicate a preferential forwarding status of active or standby for each PW in the redundancy set. In addition, a second status bit is defined to allow peer PE/T-PE nodes to coordinate a switchover operation of the PW/MS-PW path.

### SUMMARY OF THE INVENTION

The embodiment of the present invention provides a method, device and system for processing service traffic based on pseudo wires, for solving the problem of long switchover time in the existing PW redundancy technology and shortening the switchover time.

The embodiment of the present invention provides a method for processing service traffic based on pseudo wires, comprising:
receiving service traffic from a customer edge device;
determining a pseudo wire aggregation group corresponding to the service traffic;
forwarding the service traffic, according to a local strategy, to a peer device via a pseudo wire in "forwarding" status in the pseudo wire aggregation group, wherein the pseudo wire aggregation group includes more than one pseudo wire corresponding to the service traffic, and the pseudo wire in "forwarding" status is a pseudo wire between a local device and the peer device in the pseudo wire aggregation group if a local status of the local device is a standby status and a peer status of the peer device is an active status; and
assigning, to all pseudo wires in the pseudo wire aggregation group corresponding to the same service traffic, the same incoming label map entry, such that the peer device receives the service traffic from the pseudo wire according to the incoming label map entry.

The embodiment of the present invention further provides a device for processing service traffic based on pseudo wires, comprising:
a first receiving module configured to receive the service traffic from a customer edge device;
a pseudo wire aggregation group module configured to determine a pseudo wire aggregation group corresponding to the service traffic;
a first forwarding module configured to forward the service traffic, according to a local strategy, to a peer device via a pseudo wire in "forwarding" status in the pseudo wire aggregation group, wherein the pseudo wire aggregation group includes more than one pseudo wire corresponding to the service traffic, and the pseudo wire in "forwarding" status is a pseudo wire between a local device and the peer device in the pseudo wire aggregation group if a local status of the local device is a standby status and a peer status of the peer device is an active status;
wherein the device is further configured to assign, to all pseudo wires in the pseudo wire aggregation group corresponding to the same service traffic, the same incoming label map entry, such that the peer device receives the service traffic from the pseudo wire according to the incoming label map entry..

The embodiment of the present invention further provides a system for processing service traffic based on pseudo wires, comprising:
a local device configured to receive the service traffic from a customer edge device; determine a pseudo wire aggregation group corresponding to the service traffic; forward the service traffic, according to a local strategy, to a peer device via a pseudo wire in "forwarding" status in the pseudo wire aggregation group, wherein the pseudo wire aggregation group includes more than one pseudo wire corresponding to the service traffic, and the pseudo wire in "forwarding" status is a pseudo wire between a local device and the peer device in the pseudo wire aggregation group if a local status of the local device is a standby status and a peer status of the peer device is an active status;
a peer device configured to receive the service traffic from the local device via the pseudo wire in "receiving" or "active" status in the pseudo wire aggregation group and forward the service traffic from the local device to a customer edge device connected with the peer device, wherein the pseudo wire in "receiving" status is a pseudo wire between the local device and the peer device in the pseudo wire aggregation group if the local status of the local device is the active status and the peer status of the peer device is the standby status, and the pseudo wire in "active" status is a pseudo wire between the local device and the peer device in the pseudo wire aggregation group if the local status of the local device is the active status and the peer status of the peer device is the active status;
wherein the local device is further configured to assign, to all pseudo wires in the pseudo wire aggregation group corresponding to the same service traffic, the same incoming label map entry, such that the peer device receives the service traffic from the pseudo wire according to the incoming label map entry.

The method, device and system for processing service traffic based on pseudo wires provided by the embodiments of the present invention can forward the service traffic, according to a local strategy, to a peer device via the pseudo wire in "forwarding" or "active" status in the corresponding pseudo wire aggregation group, thus improving average convergence rate of the service traffic and reducing switchover time when a failure occurs in the pseudo wires.

### BRIEF DESCRIPTION OF THE DRAWINGS

Fig. 1 is a flow chart of the first embodiment of the method for processing service traffic based on pseudo wires according to the present invention;
Fig. 2 is a schematic diagram of the first embodiment of the method for processing service traffic based on pseudo wires according to the present invention;
Fig. 3 is a schematic diagram of the second embodiment of the method for processing service traffic based on pseudo wires according to the present invention;
Fig. 4 is a schematic diagram of the third embodiment of the method for processing service traffic based on pseudo wires according to the present invention;
Fig. 5 is a schematic diagram of the fourth embodiment of the method for processing service traffic based on pseudo wires according to the present invention;
Fig. 6 is a schematic diagram of the fifth embodiment of the method for processing service traffic based on pseudo wires according to the present invention;
Fig. 7 is a structural schematic diagram of the embodiment of the device for processing service traffic based on pseudo wires according to the present invention;
Fig. 8 is a structural schematic diagram of the embodiment of the system for processing service traffic based on pseudo wires according to the present invention;

### DETAILED DESCRIPTION OF THE EMBODIMENTS

The technical solution of the present invention is further described in detail below by drawings and the embodiment.

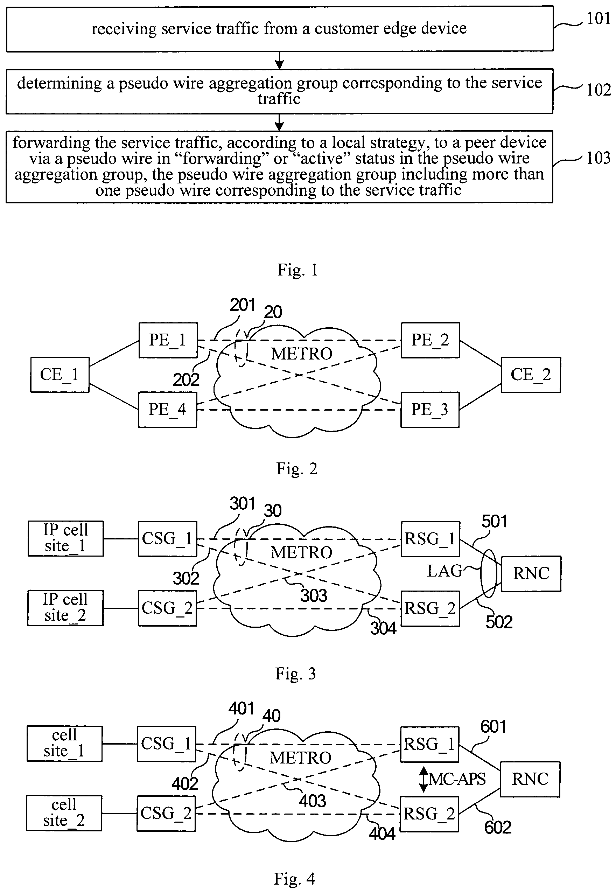

Fig. 1 is a flow chart of the first embodiment of the method for processing service traffic based on pseudo wires according to the present invention. As shown in Fig.1, the method for processing service traffic based on pseudo wires includes:
step 101, receiving service traffic from a customer edge;
step 102, determining a pseudo wire aggregation group corresponding to the service traffic;
step 103, forwarding the service traffic, according to a local strategy, to a peer device via a pseudo wire in "forwarding" or "active" status in the pseudo wire aggregation group, where the pseudo wire aggregation group including more than one pseudo wire which is corresponding to the service traffic.

In the PW redundancy technology, the local device such as the provider edge (PE) device is connected with a peer PE by Metro Ethernet (hereinafter to be referred as METRO) which includes the pseudo wire aggregation group corresponding to the service traffic. For example, a plurality of PWs corresponding to a service instance is aggregated into a PW aggregation group. For example, in a point-to-point case, a plurality of PWs corresponding to an AC (attachment circuit) is aggregated into a PW aggregation group; in a point-to-multipoint case, a plurality of PWs corresponding to a VPLS instance is aggregated into a PW aggregation group.

After the local PE receives service traffic from the CE, for example, the service instance corresponding to the service traffic could be determined first, and then the pseudo wire aggregation group corresponding to the service instance is determined as the pseudo wire aggregation group corresponding to the service traffic. For example, in the point-to-point case, it could be configured that the pseudo wire aggregation group and the attachment circuit (hereafter to be referred as AC), which forwards the service traffic, are in one-to-one correspondence, and the PE can determine the pseudo wire aggregation group corresponding to the AC, which forwards the service traffic according to the AC. After receiving the service traffic forwarded by the AC, the local PE determines the pseudo wire aggregation group corresponding to the service traffic, and then forwards the service traffic, according to a local strategy, to a peer PE via the pseudo wire in "forwarding" or "active" status in the pseudo wire aggregation group. The service traffic is then forwarded to the peer AC by the peer PE, where the AC includes the link between the PEs at the two ends and the CE. Fig. 2 is a schematic diagram of the first embodiment of the method for processing service traffic based on pseudo wires according to the present invention. In Fig. 2, if PE_1 is a local PE, the network between CE_1 and PE_1 or PE 4 is a local AC, and the network between CE_2 and PE 2 or PE_3 is a peer AC. For example, in the point-to-multipoint case, it could also be configured that the pseudo wire aggregation group and the Virtual Private LAN service (hereinafter referred as VPLS) instance are in one-to-one correspondence. After the local PE receives the service traffic, the VPLS instance corresponding to the service traffic is determined first, then the pseudo wire aggregation group corresponding to the service traffic is determined according to the pseudo wire aggregation group corresponding to the VPLS instance, and the service traffic is forwarded to the peer PE via the pseudo wire in "forwarding" or "active" status in the pseudo wire aggregation group.

Further, if the pseudo wire in the pseudo wire aggregation group receives the service forwarded by the peer device, the method for processing the service traffic further includes:
receiving, via the pseudo wire in "receiving" or "active" status in the pseudo wire aggregation group, the service traffic forwarded by the peer device;
forwarding the service traffic of the peer device to the customer edge device.

Specifically, as shown in Fig. 2, in the METRO, the local device PE_1 establishes two pseudo wires (PW) corresponding to one service: PW 201 and PW 202, where the peer device of the PW 201 is PE 2, and the peer device of the PW 202 is PE_3. On the PE_1, the PW 201 and the PW 202 are aggregated into one pseudo wire (PW) aggregation group 20. It is assumed that the local strategy is a load sharing strategy, and a load sharing relation is formed among each of the pseudo wires in the PW aggregation group 20. For example, when the PE_1 receives traffic from the CE_1,
the traffic can be forwarded to the PW in an active status of the PW 201 and the PW 202 according to a certain load sharing strategy, where the load sharing strategy includes hash, per-packet load sharing, random selection, etc.

With reference to Fig. 1, before the step 103, it is required to determine status of each pseudo wires in each pseudo wire aggregation groups. For example, the specific determination method includes:
acquiring a local status of the local device and a peer status of each peer device;
determining, according to the local status and the peer status, status of each pseudo wire in the pseudo wire aggregation group.

For example, the method for determining, according to the local status and the peer status, the status of each pseudo wire in the pseudo wire aggregation group can specifically include the following situations.
Situation 1: if the local status is the operational down status, the status of all pseudo wires in the pseudo wire aggregation group is determined to be the fault status.
Situation 2: if the local status is the active status and the peer status is the active status, the status of the pseudo wire between the local device and the peer device in the pseudo wire aggregation group is determined to be the active status.
Situation 3: if the local status is the active status and the peer status is the standby status, the status of the pseudo wire between the local device and the peer device in the pseudo wire aggregation group is determined to be the receiving status.
Situation 4: if the local status is the standby status and the peer status is the active status, the status of the pseudo wire between the local device and the peer device in the pseudo wire aggregation group is determined to be the forwarding status.
Situation 5: if the local status is the standby status and the peer status is the standby status, the status of the pseudo wire between the local device and the peer device in the pseudo wire aggregation group is determined to be the resting status.
Situation 6: if any device or link at the two ends of the pseudo wire in the pseudo wire aggregation group is faulty, the status of all pseudo wires in the pseudo wire aggregation group is determined to be the fault status.

Each service has a local status, including the active status, the operational down status and the standby status. According to the local strategy such as Multi-Chassis Link Aggregation Group (hereinafter to be referred as MC-LAG), Multi-Chassis Automatic Protection Switched (hereinafter to be referred as MC-APS), and Link Aggregation Control Protocol (hereinafter to be referred as LACP), the local device such as the local PE can set the local status to be the active status, the standby status or the operational down status. Usually, when the AC has a fault, the local status is the operational down status; when the AC status is operational up, the local status may be the standby status or the active status. For example, if a multi-chassis active/standby selection protocol (such as MC-LAG) is not adopted, the local status does not include the standby status. When the local status is the active status, the traffic can be forwarded and received from the PW; when the local status is the standby status, the traffic can't be received from the PW, but the traffic can be received from the AC, and to determine whether it is able to forward the traffic to the PW according to the peer status of the PW. If the peer status is the active status, the traffic can be forwarded to the PW.

According to the local status, the local device can transmit to the peer device of the PW an announcement which indicates the local status, and the peer device transmits to the local device an announcement which indicates the peer status. The local device and the peer device are relative concepts. For example, if a cell site gateway (hereinafter to be referred as CSG) is the local device, a remote site gateway (hereinafter to be referred as RSG) is the peer device of the CSG; while if the RSG is the local device, the CSG is the peer device of the RSG. The announcement transmitted by the local device to the peer device can be implemented by a notification message of Target Label Distribute Protocol (hereinafter to be referred as T-LDP). For example, when the local status of the RSG is the standby status, the RSG forwards to the peer CSG a notification message of the T-LDP to indicate that the RSG is in the operational up status and the standby status; when the local status of the RSG is the active status, the RSG forwards to the CSG a notification message of the T-LDP to indicate that the RSG is in the operational up status and the active status; when the local status of the RSG is the operational down status, the RSG forwards to the peer CSG a notification message of the T-LDP to indicate that the RSG is in the operational down status.

If the local device receives the notification message of the peer device, it is able to generate the status of the PW between the local device and the peer device according to the local status and the received peer status. The status of the PW includes, but not limited to the following: fault status, receiving status, forwarding status, resting status and active status. The rule for determining the status of the PW between the local device and the peer device can adopt the following examples.
Example 1: if the local status is the operational down status, the PW is in the fault status no matter what the peer status is, as the Situation 1 stated above.
Example 2: if the local status is the active status, the status of the PW is the active status if the received peer status is the active status, as the Situation 2 stated above; the status of the PW is the receiving status if the received peer status is the standby status, as the Situation 3 stated above.
Example 3: if the local status is the standby status, the status of the PW is the forwarding status if the received peer status is the active status, as the Situation 4 stated above; the status of the PW is the resting status if the received peer status is the standby status, as the Situation 5 stated above.
Example 4: if the forwarding of the PW has a fault because the link or device between the PEs at the two ends of a PW has a fault, for example, Bidirectional Forwarding Detection (hereinafter to be referred as BFD) or Multiple Protocol Label Switching (hereinafter to be referred as MPLS) OAM is used on the PW to detect that the PW does not work, the PW is in the fault status, as the Situation 6 stated above.

The PW in the active status can forward and receive the traffic; the PW in the resting status and the operational down status cannot forward or receive the traffic; the PW in the forwarding status can forward but cannot receive the traffic; the PW in the receiving status can receive but cannot forward the traffic. In addition, since the local status and the peer status determined by the devices at the two ends of a PW are not necessarily the same, the status of the PW in two directions can be different. For example, if the local status determined by the RSG is the active status, the local status determined by the CSG is the standby status. Then the status of the PW from the RSG to the CSG is the receiving status, while the status of the PW from the CSG to the RSG is the forwarding status.

Further, by adopting the method in the present embodiment, the local strategy can be the load sharing strategy or the active/standby strategy; if the local strategy is the local sharing strategy, the relation among each of the pseudo wires in the pseudo wire aggregation group is the load sharing relation; if the local strategy is the active/standby strategy, the relation among each of the pseudo wires in the pseudo wire aggregation group is the active/standby relation.

In addition, if dual-end switching is adopted, for example, the path for forwarding the service to the peer device and the path for receiving the service of the peer device can be set the same; if single-end switching is adopted, the path for forwarding the service to the peer device and the path for receiving the service of the peer device can be set to be different.

In addition, for example, when the local device forwards the service traffic to the peer device via the pseudo wire, the specific method for receiving the service traffic from the pseudo wire by the peer device can include:
establishing, for each of the pseudo wires corresponding to the same service traffic, an incoming label map (hereinafter to be referred as ILM) entry respectively, such that the peer device receives the service traffic from the pseudo wire according to the incoming label map entry; or
assigning, to all pseudo wires in the pseudo wire aggregation group corresponding to the same service traffic, the same incoming label map entry, such that the peer device receives the service traffic from the pseudo wire according to the incoming label map entry.

For example, if there are a plurality of PWs in the PW aggregation group corresponding to a service traffic, the PW in the active status and the receiving status can receive the service traffic, which is implemented by two ways: the first is that the incoming label of each PW is different, and each PW establishes an incoming label map entry for receiving the service traffic forwarded to the PW; the second is that the same incoming label map entry is assigned to all PWs corresponding to the same service traffic, and all PWs share one ILM entry. The method of all PWs corresponding to the same service traffic sharing one ILM entry can reduce the occupation of the label resources and the occupation of the forwarding table resources, and thus is a preferred solution.

Fig. 3 is a schematic diagram of the second embodiment of the method for processing service traffic based on pseudo wires according to the present invention. As shown in Fig. 3, on the basis of the first embodiment of the method for processing service traffic based on pseudo wires of the present invention, in the Ethernet, the CSG and the RSG generate local status, peer status and status of the PW according to the above rule.

If the local device receives the traffic from the AC, a PW is selected, according to the local strategy, from the PWs permitted to forward traffic, such as the PWs in the active status and the forwarding status, to forward the traffic. After the local device receives the traffic from the PW permitted to receive traffic, such as the PWs in the active status and the receiving status (there may be a plurality of PWs in these status), the traffic is forwarded to the corresponding AC.

As shown in Fig. 3, both the cell site gateway (CSG) and the remote site gateway (RSG) belong to the PE. CSG_1 is used for forwarding the service of the IP cell site_1, and establishing two PWs (PW 301 and PW 302) to RSG_1 and RSG_2 respectively for the service, PW 301 and PW 302 being a PW aggregation group 30. CSG_2 is used for forwarding the service of the IP cell site_2, and establishing two PWs (PW 303 and PW 304) to RSG_1 and RSG_2 respectively for the service. A Radio Network Controller (hereinafter to be referred as RNC) is in dual-homing access into RSG_1 and RSG_2 via two links: link 501 and link 502, and binds the links 501 and 502 into a logic link by using LACP. The LACP is also used for the link from RSG_1 and RSG_2 to RNC. The same system ID and different link IDs are configured, such that RSG_1 and RSG_2 can be operational up by negotiation with the RNC. For each PW, the corresponding RSG is associated with a certain Virtual Local Area Network (hereinafter to be referred as VLAN) of the Link Aggregation Group (hereinafter to be referred as LAG). The VLAN (not shown in the drawing), together with the LAG constitute a logical AC.

The local strategy can be the load sharing strategy: at the AC side of CSG_1, when links 501 and 502 are operational up, PW 301 and PW 302 constitute two parallel channels between CSG_1 and RNC with the links 501 and 502 respectively. The two parallel channels can take on the service traffic forwarding task of the IP cell site_1 simultaneously to realize the load sharing, thereby achieving the purpose of taking full advantage of network resources. All the traffic of the IP cell site_1 could also be forwarded by using the PW 301, and all the traffic of the IP cell site_2 could also be forwarded by using the PW 304, and process the service of a portion of the cell sites by adopting the RSG_1 and the RSG_2 respectively, to implement load sharing and use the links 501 and 502 at the same time. For example, the fault of the link 501 can be detected by LACP and other means or the RNC and the RSG_1. When the link 501 is faulty, the RNC immediately switches all the traffic to the links 502, and the RSG_2 can correctly forward the traffic to the CSG_1 and then to the IP cell site_1 without any Automatic Protection Switched (hereinafter to be referred as APS) protocol or announcement signaling. In the embodiment, the RSG_1 can change the local status into the operational down status, and transmit a message to the peer CSG to notify that the corresponding PW status is the operational down status. However, in the prior art, the traffic cannot be correctly forwarded to the cell site until the RSG_1 forwards a fault notification message of the T-LDP to the CSG, and the CSG_1 processes the message and switches the PW in the active status from the PW 301 to the PW 302. The customer data is discarded before the above series of actions is completed. Therefore, compared with the prior art, the method for processing service traffic in the embodiment can shorten the time required for the service switchover. When the load sharing strategy is used, the CSG can further determine which active PW is adopted to forward according to the customer data stream, so as to avoid out-of-order of the traffic. For example, if the customer data of the service is an IP stream, hash operation is performed according to the five-tuple of the IP <the source IP address, the destination IP address, the source port number, the destination port number, the IP protocol number>, or if different services have different VLAN priorities, the hash operation is performed to the PW according to the VLAN priority.

When the link 501 is faulty, all the logic VLANs would be faulty, and all the related PWs need to be notified. The CSG, and CSG_2 set the PW 301 and PW 302 to be in the fault status respectively. The traffic from the cell site to the RNC shall pass through the PW 302 and PW 304, respectively, which can be divided into two situations: one is that the traffic from the original cell site to the RNC passes through the PW 302 and PW304, in which there is no any influence when the link 501 is faulty, without loss of packet; the other is that the traffic from the original cell site to the RNC passes through the PW 301 and PW 303, in which when the link 501 is faulty, the traffic cannot be normally forwarded until the switch process (for example, for the CSG_1, the PW is switched from the PW 301 to the PW 302; for the CSG_2, the PW is switched from the PW 303 to the PW 304) is completed. In the later situation, the packet loss may occur for a certain period of time, the period of which is the same as in the prior art. However, in general, the average packet loss period is reduced, and the convergence rate is accelerated. In addition, in the embodiment of the present invention, the RNC can be dual-homed to the RSG by standard LACP without complicated MC-LAG technology.

In addition, the path from the CSG to the RNC and the path from the RNC to the CSG can be the same or different, which depends on the local strategies of the CSG and the RNC.

Further, the local strategy can be the active/standby strategy. As shown in Fig. 3, the MC-LAG is adopted between the RSG_1 and the RSG_2, to make an active/standby selection for a certain service, and notify the CSG_1. Assuming the RSG_1 is active, the RSG_2 is standby and the local status of the CSG_1 is the active status. According to the rule, it can be learned that at the CSG_1 end, the PW 301 in the two PWs is in the active status, and the PW 302 is in the receiving status; at the RSG_1 end, the PW 301 is in the active status; at the RSG_2 end, the PW 302 is in the forwarding status. The CSG_1 forwards the traffic from the PW 301 in the active status, and receives the traffic from the PW 301 in the active status at the RSG_1 end and from the PW 302 in the receiving status at the RSG_2 end. When there is a fault in the link 501 between the active RSG_1 and the RNC, the RNC directly switches to the link 502. Although the RSG_2 is standby, the traffic of the AC still can be forwarded to the PW 302 since the PW 302 corresponding to the service at the RSG_2 end is in the forwarding status.

In addition, the PW can be protected by using Traffic Engineering (hereinafter to be referred as TE) Fast Reroute (hereinafter to be referred as FRR) or Label Distribution Protocol (hereinafter to be referred as LDP) FRR technology. When the link or device in the network METRO is faulty, the PW can be switched to the standby LSP tunnel by the TE FRR or the LDP FRR without changing the status of the PW.

In addition, for example, the method for configuring pseudo wires can be as following.

Method 1: configuring, at one end of a pre-established pseudo wire, the first local forwarding equivalence class (Forwarding Equivalence Class, hereinafter to be referred as FEC) information, designating the peer device, and configuring, at the other end of the pseudo wire, the second local forwarding equivalence class information;
initiating, by a device at one end of the pseudo wire, a pseudo wire establishing request which includes the first local forwarding equivalence class information;
determining after the device at the other end of the pseudo wire receives the pseudo wire establishing request, whether the first local forwarding equivalence class information matches the second local forwarding equivalence class information, if yes, accepting the pseudo wire establishing request and establishing the pseudo wire.

For example, the pseudo wire is configured by adopting the forwarding equivalence class information FEC 128.

With reference to Fig. 3, it is assumed that the RSG_1 adopts the FEC 128 to configure the FEC information of the PW 301, which includes the PW ID and the encapsulation type of the local AC, and designates the CSG_1 as the peer device of the RSG_1; the RSG_2 also configures the PW ID and the encapsulation type of the local AC for the PW 302, and designates the CSG_1 as the peer device. However, the CSG_1 only configures the PW ID and the encapsulation type of the local AC, and does not designate the peer device. When the CSG_1 receives the pseudo wire establishing request (e.g., LDP MAPPING) of the RSG_2, the CSG_1 parses the forwarding equivalence class (FEC) information in the pseudo wire establishing request. Since the FEC 128 is adopted, it is only necessary to determine whether the PW ID and the encapsulation type carried in the pseudo wire establishing request match the local FEC information of the CSG_1. The PW is established automatically if they are matched, and the PW is not established if they are not matched. Therefore, the CSG_1 only needs to configure the PW ID and the encapsulation type of the local AC of the PW 301 and the PW 302, but does not need to designate the peer device.

Method 2: configuring, at one end of a pre-established pseudo wire, the first local forwarding equivalence class information and the first peer forwarding equivalence class information, and configuring, at the other end of the pseudo wire, the second local forwarding equivalence class information;
initiating, by a device at one end of the pseudo wire, a pseudo wire establishing request which includes the first local forwarding equivalence class information and the first peer forwarding equivalence class information;
determining, after the device at the other end of the pseudo wire receives the pseudo wire establishing request, whether the first peer forwarding equivalence class information matches the second local forwarding equivalence class information, if yes, accepting the pseudo wire establishing request and establishing the pseudo wire.

For example, the FEC 129 is adopted to configure the pseudo wire.

With reference to Fig. 3, the CSG_1 may not configure the peer FEC information of the PW 301, but only configure the local FEC information. For example, the local FEC information of AC ID, global ID and prefix is configured when the FEC 129 is adopted. The PW can be established if the local FEC information and the peer FEC information (AC ID, global ID, and prefix) are configured on the RSG_1 and the RSG_2. One end of the peer FEC information is configured, for example, the RSG_1 initiates the pseudo wire establishing request first, after receiving the pseudo wire establishing request, the CSG_1 performs matching according to the peer FEC information and the CSG_1 local FEC information in the pseudo wire establishing request, and the PW is automatically established if the matching exists. Each PW only needs to configure the peer FEC information at one end. The peer FEC information configuration is reduced by half averagely. The end which is not configured with the peer FFC information "automatically finds" the peer device, which is a semi-automatic finding method in the whole.

In the present embodiment, the local device forwards the service traffic from the customer edge device, according to a local strategy, to the peer device via the pseudo wire in "forwarding" or "active" status in the corresponding pseudo wire aggregation group, thus improving average convergence rate of the service traffic and reducing switchover time when a failure occurs in the network; when the local strategy is the load sharing strategy, it is further able to implement the load sharing among the member PWs in the PW aggregation group, and take full advantage of the network resources; the single-end switching of the service could be implemented; the complicated multi-chassis protocol such as MC-LAG is not needed, thereby reducing the network expense.

In the present embodiment, in the Ethernet, the CSG forwards the service traffic, according to the load sharing strategy, to the RSG via the pseudo wire in "forwarding" or "active" status in the corresponding pseudo wire aggregation group, with short convergence time and high switchover speed. Moreover, it is able to implement the load sharing among the member PWs in the PW aggregation group, to take full advantage of the network resources, and to realize the single-end switching of the service; the complicated multi-chassis protocol such as MC-LAG is not needed, thereby reducing the network expense.

Fig. 4 is a schematic diagram of the third embodiment of the method for processing service traffic based on pseudo wires according to the present invention. In the present embodiment, the cell site can connect with the CSG by using Time Division Multiplex (hereinafter to be referred as TDM) and ATM links. The RSG and the RNC can be connected by using the TDM and the ATM. A physical interface can be Synchronous Transmission Module (hereinafter to be referred as STM)-n. The PW of the ATM, TDM type is established between the CSG and the RSG. Unlike the Ethernet, in the TDM and ATM, the local strategy cannot use the sharing strategy, but can adopt the active/standby strategy, that is to select one of the two RSGs to be active and the other to be standby by using MC-APS.

If the RSG is selected to be standby, the RSG forwards to the peer CSG a notification message of the T-LDP, which indicates that the RSG is in the standby status; it is assumed that the RSG is selected to be active, the RSG forwards to the peer CSG a notification message of the T-LDP, which indicates that the RSG is in the active status. After the CSG receives the notification message of the RSG, if the local status of the CSG is the operational up status, the status of the PW which receives the standby status of the peer RSG is the receiving status, and the status of the PW which receives the active status of the peer RSG is the active status. Similarly, if the local status of the RSG is the active status, the status of the PW which receives the standby status of the peer CSG is the receiving status, and the status of the PW which receives the active status of the peer CSG is the active status; if the local status of the RSG is the standby status, the status of the PW which receives the standby status of the peer CSG is the resting status, and the status of the PW which receives the active status of the peer CSG is the forwarding status. The PW in the resting status cannot forward or receive a customer message, and the PW in the forwarding status can forward but cannot receive the customer message. It is assumed that in Fig. 4, the CSG_1 end is in the active status, the CSG_2 end is in the active status, the RSG_1 end is in the active status, and the RSG_2 end is in the standby status, it can be learnt that the status of the PW 401 at the CSG_1 end is the active status, the status of the PW 402 at the CSG_1 end is the receiving status, the status of the PW 403 at the CSG_2 end is the forwarding status, and the status of the PW 404 at the CSG_2 end is the resting status. Therefore, the CSG_1 can select the PW 401 to forward the service traffic, and the CSG_2 can select the PW 403 to forward the service traffic. The RSG_1 forwards the service traffic to the link 601 after receiving the service traffic from the PW 401 and the PW 403.

If the RSG and RNC are configured with bidirectional services, that is the dual-end switching, the traffics in the two directions of the service traffic pass through the same route, the link between the RSG and the RNC is considered as the link fault no matter the fault occurs in which direction, and the RSG sends a notification message of the T-LDP to the CSG to indicate the operational down status; if the two directions of the link between the RSG and the RNC are normal, and the result selected according to the MC-APS protocol is the standby status, the RSG sends a notification message of the T-LDP to the CSG to indicate the operational up status and the standby status; if the two directions of the link between the RSG and the RNC are normal, and the result selected according to the MC-APS protocol is the active status, the RSG sends a notification message of the T-LDP to the CSG to indicate the operational up status and the active status, like other embodiments.

If the RSG and the RNC are configured with unidirectional services, that is the single-end switching, the traffics in the two directions of the service traffic pass through different routes, as shown in Fig. 4, the RSG sends the notification message of the T-LDP to the CSG according to the fault situation of the links 601 and 602 in the direction from the RSG to the RNC, to indicate the status of the link: if a link is not faulty and the link is selected as an active link by MC-APS, the operational up status and the active status are indicated; if a link is faulty, the operation down status is indicated; if a link is not faulty and the link is selected to as standby link by MC-APS, the operational up status and the standby status are indicated.

When the active link 601 in a direction from the RSG to the RNC is faulty, for example, the RNC detects the fiber from the RNC to the RSG_1 is faulty, the traffic to be sent to the CSG is switched from the link 601 to the link 602 via the APS protocol. After the RSG_2 receives the traffic of the RNC, the traffic can be directly sent to the PW 402 since the PW 402 is in the forwarding status at the RSG_2 end. After the CSG_1 receives the traffic of the PW 402, since the PW 402 is in the receiving status at the CSG_1 end, it can receive and normally process the traffic: the CSG_1 forwards the traffic to the cell site_1. The traffic from the RNC to the cell site_2 is processed the same way. the services can be distinguished according to the customer identification information (such as the channel number of STM-n) in the traffic received from the RNC on the RSG_1 and the RSG_2, and different services can be associated with different PWs. Therefore, the traffic from the RNC to the cell site can be correctly forwarded to the CSG without any APS protocol or announcement signaling between the RSG and the CSG, and then forwarded to the cell site. However, in the prior art, the traffic cannot be correctly forwarded to the cell site until the RSG_1 sends a fault notification message of the T-LDP to the CSG and the CSG_1 processes the message and switches the PW in the active status from the PW 401 to the PW 402. Before the series of actions is completed, the customer message is discarded.

For the traffic in the direction from the RNC to the CSG, it is necessary to coordinate the active/standby relation by the MC-APS which can be a similar mechanism in the opposite direction, and take charge of the active/standby selection in the two directions. The selection result in the two directions can be different. The processing of the traffic in the direction from the RNC to the CSG is the same as the processing of the traffic in the direction from the active/standby RNC to the CSG.

If the RSG and the RNC are configured with the dual-end switching, that is to say the switching needs to be completed by the negotiation of the sending end and receiving end. The active/standby and bidirectional switching stated before is the dual-end switching. It is necessary for the RSG to support the MC-APS and the RNC to support the APS, operating in a 1:1 mode.

If the RSG and the RNC are configured with the single-end switching, that is, the switching only needs to be completed at the receiving end, the sending end is in dual-sending, operating in the 1+1 mode.

As shown in Fig. 4, the RSG sends a notification message of the T-LDP to the CSG according to the fault situation of the links 601 and 602 in the direction from the RSG to the RNC, to indicate the status of the link: if a link is not faulty and the link is selected as an active link by a selection coordination protocol (that is the second half part of the "selection coordination protocol" in the following part of this paragraph), the active status is indicated; if a link is faulty, the operation down status is indicated; if a link is not faulty and the link is selected as a standby link by the selection coordination protocol, the standby status is indicated. A simple selection coordination protocol is needed among RSGs. It is assumed that the RSG_1 is selected to receive the traffic sent by the RNC, the RSG_2 discards the traffic sent by the RNC (where the RNC is in dual-sending); meanwhile, it is assumed that the RSG_2 is selected to receive the traffic sent by the CSG, and the RSG_1 sends the fault indication information (for example, the indication information is all 1) to the RNC such that the RNC does not receive the traffic from the link 601.

When the active link 601 in a direction from the RSG to the RNC is faulty, the RSG_1 sends a notification message of the T-LDP to the CSG to indicate the operational down status, and the RSG_2 sends a notification message of the T-LDP to the CSG to indicate the operational up status and the active status after perceiving the fault (which can be announced by the RSG_1 using a mechanism such as ICCP). The CSG1 switches the traffic from the PW 401 to the PW 402 after receiving and processing the notification message of the T-LDP, and the CSG2 similarly switches the traffic from the PW 403 to the PW 404. The RSG_2 receives the traffic sent from the CSG and forwards the traffic to the RNC via the link 602.

When the active link 601 in a direction from the RNC to the RSG is faulty, for example, since the service on RNC is bidirectional, the processing is not changed. The RSG_2 receives the traffic sent by the RNC and forwards the traffic to the CSG via the PW 402 after perceiving the fault (the selection coordination protocol makes a new selection according to the fault, the RSG_2 becomes a new active device). Herein, since the PW 402 is in the forwarding status at the RSG_2 end, the traffic can be directly transmitted to the PW 402. After the CSG_1 receives the traffic of the PW 402, since the PW 402 is in the receiving status at the CSG_1 end, it can receive and normally process the traffic: the CSG_1 forwards the traffic to the cell site_1. The traffic processing from the RNC to the cell site_2 is similar to this. The services can be distinguished according to the customer identification information (such as the channel number of STM-n) in the traffic received from the RNC on the RSG_1 and the RSG_2, and different services can be associated with different PWs. Therefore, the traffic from the RNC to the cell site can be correctly forwarded to the CSG without any APS protocol or announcement signaling between the RSG and the CSG, and then forwarded to the cell site. However, in the prior art, the traffic can't be correctly forwarded to the cell site until the RSG_1 transmits a fault notification message of the T-LDP to the CSG and the CSG_1 processes the message and switches the PW in the active status from the PW 401 to the PW 402. Before the series of actions is completed, the customer message is discarded.

In the embodiment, in the TDM and ATM, the CSG forwards the service traffic, according to the active/standby strategy, to the RSG via the PW in "forwarding" or "active" status in the corresponding PW aggregation group. The convergence time is short, the switchover speed is high, and the single-end switchover can be implemented.

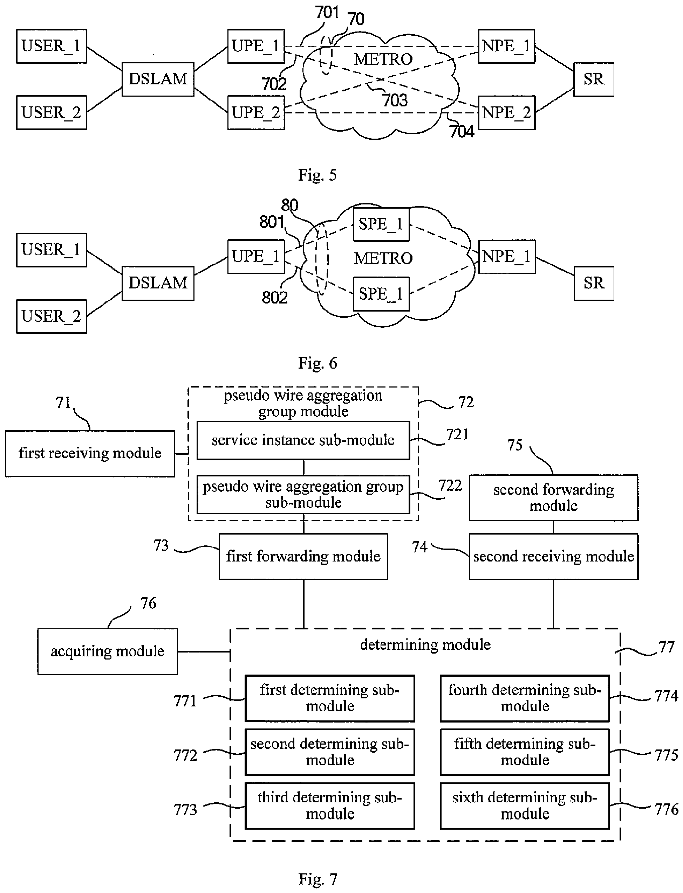

Fig. 5 is a schematic diagram of the fourth embodiment of the method for processing service traffic based on pseudo wires according to the present invention. As shown in Fig. 5, on the basis of the second and third embodiments of the method for processing service traffic based on pseudo wires of the present invention, the CSG is replaced with a User Facing Provider Edge (hereinafter to be referred as UPE) device, the RSG is replaced with a Network Facing Provider Edge (hereinafter to be referred as NPE) device, the cell site is replaced with a Digital Subscriber Line Access Multiplexer (hereinafter to be referred as DSLAM), and the RNC is replaced with a Service Router (hereinafter to be referred as SR), where the DSLAM is dual-homed to two UPEs: UPE_1 and UPE_2. The PW establishing and forwarding rule at the UPE end and the NPE end can refer to the descriptions in the above embodiment. In the present embodiment, the two links from the DSLAM to the UPE_1 and the UPE_2 as well as the two links from the SR to the NPE_1 and the NPE_2 are both AC.

In the present embodiment, a plurality of traffic are equivalent to one service traffic after passing through the DSLAM, and what is processed on the UPE_1 and the UPE_2 is also equivalent to the service of one customer after the DSLAM is in dual-homed to the UPE_1 and the UPE_2. At this time, there is a PW aggregation group on the UPE_1, including the PW 701 and the PW 702. There is a PW aggregation group on the UPE_2, including the PW 703 and the PW 704.

In the prior art, the MC-LAG need to determine the active UPE and the standby UPE between the two UPEs. If the status of the AC doesn't changed and the original PW is faulty, it is requested to redirect the traffic by establishing an inter-chassis backup (hereinafter to be referred as ICB) PW between the UPEs or establishing the ICB PW between the NPEs so as to provide redundancy protection. However, in the embodiment, the traffic can be rapidly converged to other available PWs without the ICB PW after the currently used PW is faulty as long as the two links of the DSLAM are not faulty at the same time. As shown in Fig. 5, it is assumed that both the PW 701 and the PW 703 at the NPE_1 end are in the active status, and the traffic from the SR to the DSLAM is transmitted from the PW 701, when the PW 701 is faulty, the traffic from the SR to the DSLAM is transmitted from the PW 703.

In the present embodiment, the UPE forwards the service traffic of the ACDSLAM, according to a local strategy, to the NPE via the pseudo wire in "forwarding" or "active" status in the corresponding PW aggregation group, in which the convergence time is short and the switchover speed is high. Moreover, it is able to implement the load sharing among the member PWs in the PW aggregation group, and take full advantage of the network resources; and the single-end switchover of the service could be implemented as well.

Fig. 6 is a schematic diagram of the fifth embodiment of the method for processing service traffic based on pseudo wires according to the present invention. As shown in Fig. 6, the CE device of the UPE_1 is the DSLAM, and the CE device of the NPE_1 is the SR. Two PWs, PW 801 and PW 802, are established between the UPE_1 and the NPE_1. The PW in Fig. 6 can adopt the single-hop manner, at this manner, the tunnels of the two PWs are different, and the physical link or the intermediate device through which the tunnel passes is generally different. The PW can also adopt the multi-hop way, for example, the PW 801 and the PW 802 pass through the SPE_1 device and the SPE_2 device respectively.

If the connectivity of the PW is not faulty, for example, no fault is found by the PW connectivity detection such as BFD or MPLS OAM, the statuses of the two PWs are consistent since the local status of the UPE_1 and the NPE_1 are the same. According to the sharing strategy, the two PWs can form the load-sharing PW aggregation group.

Further, the UPE_1 or NPE_1 can adopt the active/standby strategy according to the local situation, and only transmits a message from a certain PW in the active status or the forwarding status. The peer device could be notified of the active/standby status of the PW via the signaling message, so as to change the path of the traffic in a direction from the peer device to the local device. For example, the UPE_1 sets the priority of the PW 801 higher than the priority of the PW 802, and the PW 801 and the PW 802 adopt the active/standby working mode. When the local status of the UPE_1 is the active status, the UPE_1 sends a notification message to the peer device of the PW 801, to indicate that the local status of the PW 801 is the active status, and sends a notification message to the peer device of the PW 802 to indicate that the local status of the PW 802 is the standby status at the same time. The SPE needs to forward the received notification message. The NPE_1 has the similar configurations: the PW 801 is active, and the PW 802 is standby, and corresponding notification message is sent to the UPE_1. After completion of configuration, it is preferable to sent and received the traffic on the path of the PW 801. If the active/standby statuses set on the UPE_1 and the NPE_1 are inconsistent, traffic in two directions is conducted to pass through different PWs respectively, for example, passing through the PW 801 from the UPE_1 to the NPE_1, and passing through the PW 802 from the NPE_1 to the UPE_1.

In the present embodiment, the UPE forwards the service traffic of the ACDSLAM, according to the sharing strategy or the active/standby strategy, to the NPE via the pseudo wire in "forwarding" or "active" status in the corresponding PW aggregation group, in which the convergence time is short and the switchover speed is high; when the sharing strategy is used, it is able to flexibly change the traffic distribution according to the network planning, to implement the load sharing among the member PWs in the PW aggregation group, and to take full advantage of the network resources; when the active/standby strategy is used, it is possible to automatically select the PW with the highest priority among the PWs which have no connectivity fault as an active PW when the PW through which the traffic passes has a connectivity fault; the single-end switchover could be implemented as well.

A person skilled in the art will appreciate that all or a part of the steps of the methods in the above embodiments may be implemented by related hardware instructed by a program. The aforementioned program may be stored in a computer readable storage medium, including various media capable of storing program codes, such as ROM, RAM, magnetic disk, optical disk, etc. The steps of the methods in the embodiments are executed when the program is executed.

Fig. 7 is a structural schematic diagram of the embodiment of the device for processing service traffic based on pseudo wires according to the present invention. As shown in Fig. 7, the device for processing service traffic based on pseudo wires comprises a first receiving module 71, a pseudo wire aggregation group module 72 and a first forwarding module 73,
where the first receiving module 71 is configured to receive the service traffic from a customer edge device;
the pseudo wire aggregation group module 72 is configured to determine a pseudo wire aggregation group corresponding to the service traffic;
the first forwarding module 73 is configured to forward the service traffic, according to a local strategy, to a peer device via a pseudo wire in "forwarding" or "active" status in the pseudo wire aggregation group, where the pseudo wire aggregation group including more than one pseudo wire corresponding to the service traffic.

Specifically, in the PW redundancy technology, the device for processing service traffic based on pseudo wires, such as the PE, is divided into the local device and the peer device. After the first receiving module 71 of the local device receives a service traffic from a customer edge device, the pseudo wire aggregation group module 72 determines a pseudo wire aggregation group corresponding to the service traffic, and the first forwarding module 73 forwards the service traffic, according to a local strategy, to the peer device via the pseudo wire in "forwarding" or "active" status in the pseudo wire aggregation group. The local strategy can be a load sharing strategy or an active/standby strategy. The relation between each of the pseudo wires in the pseudo wire aggregation group corresponding to the service traffic is the load sharing relation or the active/standby relation. The type of the pseudo wire aggregation group, the type of each of the pseudo wires in the pseudo wire aggregation group and the type of the AC can be the Ethernet mode, the asynchronous transport mode or the time division multiplex mode.

Further, the pseudo wire aggregation group module 72 may include: a service instance sub-module 721 and a pseudo wire aggregation group sub-module 722,
where the service instance sub-module 721 is configured to determine a service instance corresponding to the service traffic;
the pseudo wire aggregation group sub-module 722 is configured to determine a pseudo wire aggregation group corresponding to the service instance to be the pseudo wire aggregation group corresponding to the service traffic.

Further, the device for processing service traffic based on pseudo wires may include a second receiving module 74 and a second forwarding module 75,
where the second receiving module 74 is configured to receive the service traffic of the peer device via the pseudo wire in the receiving status or the active status in the pseudo wire aggregation group;
the second forwarding module 75 is configured to forward the service traffic of the peer device to the customer edge device.

Further, the device for processing service traffic based on pseudo wires needs to determine the status of each of the pseudo wires in each of the pseudo wire aggregation groups, thereby can further includes an acquiring module 76 and a determining module 77,
where the acquiring module 76 is configured to acquire a local status of the local device and a peer device status of each of the peer devices;
the determining module 77 is configured to determine the status of each of the pseudo wires in the pseudo wire aggregation group according to the local status and the peer status.

The determining module 77, according to different rules, may include any one or a plurality of the following modules:
a first determining sub-module 771, configured to determine the status of all pseudo wires in the pseudo wire aggregation group to be the fault status if the local status is the operational down status;
a second determining sub-module 772, configured to determine the status of the pseudo wire between the local device and the peer device in the pseudo wire aggregation group to be the active status if the local status is the active status and the peer status is the active status;
a third determining sub-module 773, configured to determine the status of the pseudo wire between the local device and the peer device in the pseudo wire aggregation group to be the receiving status if the local status is the active status and the peer status is the standby status;
a fourth determining sub-module 774, configured to determine the status of the pseudo wire between the local device and the peer device in the pseudo wire aggregation group to be the forwarding status if the local status is the standby status and the peer status is the active status;
a fifth determining sub-module 775, configured to determine the status of the pseudo wire between the local device and the peer device in the pseudo wire aggregation group to be the resting status if the local status is the standby status and the peer status is the standby status;
a sixth determining sub-module 776, configured to determine the status of all pseudo wires in the pseudo wire aggregation group to be the fault status if any device or link at the two ends of the pseudo wire in the pseudo wire aggregation group is faulty.

The specific methods for determining the status of the pseudo wire can refer to the Situation 1 to Situation 6 in the first embodiment of the method for processing service traffic based on pseudo wires of the present invention and the related descriptions.

Further, the device for processing service traffic based on pseudo wires may further set the path for forwarding the service to the peer device and the path for receiving the service of the peer device to be the same; or set the path for forwarding the service to the peer device and the path for receiving the service of the peer device to be different.

In the embodiment, after the first receiving module receives a service traffic from a customer edge device, the pseudo wire aggregation group module determines a pseudo wire aggregation group corresponding to the service traffic, and then the first forwarding module may forward the service traffic, according to a local strategy, to a peer device via the pseudo wire in "forwarding" or "active" status in the corresponding pseudo wire aggregation group in accordance with the status of the pseudo wire determined by each of the determining sub-modules. The embodiment could improve average convergence rate of the service traffic, shorten the switchover time when a failure occurs in the network, take full advantage of the network resources and reduce the network expense.

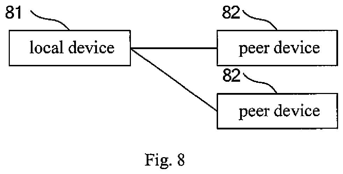

Fig. 8 is a structural schematic diagram of the embodiment of the system for processing service traffic based on pseudo wires according to the present invention. As shown in Fig. 8, the system for processing service traffic based on pseudo wires includes: a local device 81 and a peer device 82,
where the local device 81 is configured to receive the service traffic from a customer edge device; determine a pseudo wire aggregation group corresponding to the service traffic; forward the service traffic, according to a local strategy, to a peer device 82 via a pseudo wire in "forwarding" or "active" status in the pseudo wire aggregation group, where the pseudo wire aggregation group includes more than one pseudo wire corresponding to the service traffic;
the peer device 82 is configured to receive the service traffic from the local device 81 via the pseudo wire in "receiving" or "active" status in the pseudo wire aggregation group and forward the service traffic from the local device 81 to a customer edge device connected with the peer device.

Specifically, the local device 81 forwards the service traffic from the customer edge device, according to the local strategy, to the peer device 82 via the pseudo wire in the forwarding status or the active status in the corresponding pseudo wire aggregation group; the peer device 82 forwards the service traffic of the local device 81 to the customer edge device connected with the peer device 82 after receiving the service traffic of the local device 81 via the pseudo wire in the receiving status or the active status in the pseudo wire aggregation group. The structures of the local device 81 and the peer device 82 in the embodiment can adopt any one of the structures of the device for processing service traffic based on pseudo wires in each of the embodiments in the present invention.

In the above embodiment, the local device forwards the service traffic from the customer edge device, according to the local strategy, to the peer device via the pseudo wire in "forwarding" or "active" status in the corresponding PW aggregation group, thus improving average convergence rate of the service traffic and reducing switchover time when a failure occurs in the network. The above embodiment could take full advantage of the network resources and reduce the network expense.

## Claims

1. A method for processing service traffic based on pseudo wires, comprising:
receiving (101) service traffic from a customer edge device; and
determining (102) a pseudo wire aggregation group corresponding to the service traffic;
**characterized in that** the method further comprises,
forwarding (103) the service traffic, according to a local strategy, to a peer device via a pseudo wire in "forwarding" status in the pseudo wire aggregation group, wherein the pseudo wire aggregation group includes more than one pseudo wire corresponding to the service traffic, and the pseudo wire in "forwarding" status is a pseudo wire between a local device and the peer device in the pseudo wire aggregation group if a local status of the local device is a standby status and a peer status of the peer device is an active status; and
assigning, to all pseudo wires in the pseudo wire aggregation group corresponding to the same service traffic, the same incoming label map entry, such that the peer device receives the service traffic from the pseudo wire according to the incoming label map entry.

2. The method for processing service traffic based on pseudo wires according to claim 1, **characterized in that** determining (102) a pseudo wire aggregation group corresponding to the service traffic comprises:
determining a service instance corresponding to the service traffic;
determining a pseudo wire aggregation group corresponding to the service instance to be the pseudo wire aggregation group corresponding to the service traffic.

3. The method for processing service traffic based on pseudo wires according to claim 1 or claim 2, **characterized by** further comprising:
receiving the service traffic of the peer device via the pseudo wire in "receiving" or "active" status in the pseudo wire aggregation group, wherein the pseudo wire in "receiving" status is a pseudo wire between the local device and the peer device in the pseudo wire aggregation group if the local status of the local device is the active status and the peer status of the peer device is the standby status, and the pseudo wire in "active" status is a pseudo wire between the local device and the peer device in the pseudo wire aggregation group if the local status of the local device is the active status and the peer status of the peer device is the active status;
forwarding the service traffic of the peer device to the customer edge device.

4. The method for processing service traffic based on pseudo wires according to claim 1 or 2, **characterized in that** the method for configuring the pseudo wire comprises:
configuring, at one end of a pre-established pseudo wire, a first local forwarding equivalence class information, designating the peer device, and configuring, at the other end of the pseudo wire, a second local forwarding equivalence class information;
initiating, by the device at one end of the pseudo wire, a pseudo wire establishing request which includes the first local forwarding equivalence class information;
determining, after the device at the other end of the pseudo wire receives the pseudo wire establishing request, whether the first local forwarding equivalence class information matches the second local forwarding equivalence class information, and if yes, accepting the pseudo wire establishing request and establishing the pseudo wire.

5. The method for processing service traffic based on pseudo wires according to claim 1 or 2, **characterized in that** the method for configuring the pseudo wire comprises:
configuring, at one end of a pre-established pseudo wire, a first local forwarding equivalence class information and a first peer forwarding equivalence class information, and configuring, at the other end of the pseudo wire, a second local forwarding equivalence class information;
initiating, by the device at one end of the pseudo wire, a pseudo wire establishing request which includes the first local forwarding equivalence class information and the first peer forwarding equivalence class information;
determining, after the device at the other end of the pseudo wire receives the pseudo wire establishing request, whether the first peer forwarding equivalence class information matches the second local forwarding equivalence class information, and if yes, accepting the pseudo wire establishing request and establishing the pseudo wire.

6. A device for processing service traffic based on pseudo wires, comprising:
a first receiving module (71), configured to receive service traffic from a customer edge device;
a pseudo wire aggregation group module (72), configured to determine a pseudo wire aggregation group corresponding to the service traffic;
**characterized in that** the device further comprises,
a first forwarding module (73), configured to forward the service traffic, according to a local strategy, to a peer device via a pseudo wire in "forwarding" status in the pseudo wire aggregation group, wherein the pseudo wire aggregation group includes more than one pseudo wire corresponding to the service traffic, and the pseudo wire in "forwarding" status is a pseudo wire between a local device and the peer device in the pseudo wire aggregation group if a local status of the local device is a standby status and a peer status of the peer device is an active status;
wherein the device is further configured to assign, to all pseudo wires in the pseudo wire aggregation group corresponding to the same service traffic, the same incoming label map entry, such that the peer device receives the service traffic from the pseudo wire according to the incoming label map entry.

7. The device for processing service traffic based on pseudo wires according to claim 6, **characterized in that** the pseudo wire aggregation group module (72) comprises:
a service instance sub-module (721), configured to determine a service instance corresponding to the service traffic;
a pseudo wire aggregation group sub-module (722), configured to determine a pseudo wire aggregation group corresponding to the service instance to be the pseudo wire aggregation group corresponding to the service traffic.

8. The device for processing service traffic based on pseudo wires according to claim 6 or claim 7, **characterized by** further comprising:
a second receiving module (74), configured to receive the service traffic of the peer device via the pseudo wire in "receiving" or "active" status in the pseudo wire aggregation group, wherein the pseudo wire in "receiving" status is a pseudo wire between the local device and the peer device in the pseudo wire aggregation group if the local status of the local device is the active status and the peer status of the peer device is the standby status, and the pseudo wire in "active" status is a pseudo wire between the local device and the peer device in the pseudo wire aggregation group if the local status of the local device is the active status and the peer status of the peer device is the active status;
a second forwarding module (75), configured to forward the service traffic of the peer device to the customer edge device.

9. A system for processing service traffic based on pseudo wires, comprising:
a local device (81), configured to receive service traffic from a customer edge device; determine a pseudo wire aggregation group corresponding to the service traffic; forward the service traffic, according to a local strategy, to a peer device (82) via a pseudo wire in "forwarding" status in the pseudo wire aggregation group, wherein the pseudo wire aggregation group includes more than one pseudo wire corresponding to the service traffic, and the pseudo wire in "forwarding" status is a pseudo wire between the local device (81) and the peer device (82) in the pseudo wire aggregation group if a local status of the local device (81) is a standby status and a peer status of the peer device (82) is an active status;
a peer device (82), configured to receive the service traffic from the local device (81) via the pseudo wire in "receiving" or "active" status in the pseudo wire aggregation group and forward the service traffic from the local device (81) to a customer edge device connected with the peer device (82), wherein the pseudo wire in "receiving" status is a pseudo wire between the local device (81) and the peer device (82) in the pseudo wire aggregation group if the local status of the local device (81) is the active status and the peer status of the peer device (82) is the standby status, and the pseudo wire in "active" status is a pseudo wire between the local device (81) and the peer device (82) in the pseudo wire aggregation group if the local status of the local device (81) is the active status and the peer status of the peer device (82) is the active status;
wherein the local device (81) is further configured to assign, to all pseudo wires in the pseudo wire aggregation group corresponding to the same service traffic, the same incoming label map entry, such that the peer device (82) receives the service traffic from the pseudo wire according to the incoming label map entry.

## Patentansprüche

1. Verfahren zur Verarbeitung von Dienstverkehr auf der Basis von Pseudodrähten, umfassend:
Empfangen (101) von Dienstverkehr von einer "Customer Edge"-Vorrichtung; und
Bestimmen (102) einer Pseudodraht-Aggregationsgruppe, die dem Dienstverkehr entspricht;
**dadurch gekennzeichnet, dass** das Verfahren ferner umfasst:
Weiterleiten (103) des Dienstverkehrs, gemäß einer lokalen Strategie, an eine "Peer"-Vorrichtung über einen Pseudodraht im Status "Weiterleiten" in der Pseudodraht-Aggregationsgruppe, wobei die Pseudodraht-Aggregationsgruppe mehr als einen Pseudodraht aufweist, der dem Dienstverkehr entspricht, und der Pseudodraht im Status "Weiterleiten" ein Pseudodraht zwischen einer lokalen Vorrichtung und der "Peer"-Vorrichtung in der Pseudodraht-Aggregationsgruppe ist, falls ein lokaler Status der lokalen Vorrichtung ein Bereitschaftsstatus ist und ein "Peer"-Status der "Peer"-Vorrichtung ein aktiver Status ist; und
Zuweisen, zu allen Pseudodrähten in der Pseudodraht-Aggregationsgruppe, die demselben Dienstverkehr entsprechen, desselben "Incoming Label Map"-Eintrags, so dass die "Peer"-Vorrichtung den Dienstverkehr von dem Pseudodraht gemäß dem "Incoming Label Map"-Eintrag empfängt.

2. Verfahren zur Verarbeitung von Dienstverkehr auf der Basis von Pseudodrähten nach Anspruch 1, **dadurch gekennzeichnet, dass** das Bestimmen (102) einer Pseudodraht-Aggregationsgruppe, die dem Dienstverkehr entspricht, umfasst:
Bestimmen einer Dienstinstanz, die dem Dienstverkehr entspricht;
Bestimmen einer Pseudodraht-Aggregationsgruppe, die der Dienstinstanz entspricht, als die Pseudodraht-Aggregationsgruppe, die dem Dienstverkehr entspricht.

3. Verfahren zur Verarbeitung von Dienstverkehr auf der Basis von Pseudodrähten nach Anspruch 1 oder Anspruch 2, **dadurch gekennzeichnet, dass** es ferner umfasst:
Empfangen des Dienstverkehrs der "Peer"-Vorrichtung über den Pseudodraht im Status "Empfangen" oder "Aktiv" in der Pseudodraht-Aggregationsgruppe, wobei der Pseudodraht im Status "Empfangen" ein Pseudodraht zwischen der lokalen Vorrichtung und der "Peer"-Vorrichtung in der Pseudodraht-Aggregationsgruppe ist, falls der lokale Status der lokalen Vorrichtung der aktive Status ist und der "Peer"-Status der "Peer"-Vorrichtung der Bereitschaftsstatus ist, und der Pseudodraht im Status "Aktiv" ein Pseudodraht zwischen der lokalen Vorrichtung und der "Peer"-Vorrichtung in der Pseudodraht-Aggregationsgruppe ist, falls der lokale Status der lokalen Vorrichtung der aktive Status ist und der "Peer"-Status der "Peer"-Vorrichtung der aktive Status ist;
Weiterleiten des Dienstverkehrs der "Peer"-Vorrichtung an die "Customer Edge"-Vorrichtung.

4. Verfahren zur Verarbeitung von Dienstverkehr auf der Basis von Pseudodrähten nach Anspruch 1 oder 2, **dadurch gekennzeichnet, dass** das Verfahren zum Konfigurieren des Pseudodrahtes umfasst:
Konfigurieren, an einem Ende eines zuvor eingerichteten Pseudodrahtes, einer ersten lokalen Weiterleitungsäquivalenzklassen-Information, Festlegen der "Peer"-Vorrichtung und Konfigurieren, am anderen Ende des Pseudodrahtes, einer zweiten lokalen Weiterleitungsäquivalenzklassen-Information;
Auslösen, durch die Vorrichtung an einem Ende des Pseudodrahtes, einer Pseudodraht-Einrichtungsanforderung, welche die erste lokale Weiterleitungsäquivalenzklassen-Information enthält;
Bestimmen, nachdem die Vorrichtung am anderen Ende des Pseudodrahtes die Pseudodraht-Einrichtungsanforderung empfangen hat, ob die erste lokale Weiterleitungsäquivalenzklassen-Information mit der zweiten lokalen Weiterleitungsäquivalenzklassen-Information übereinstimmt, und falls ja, Annehmen der Pseudodraht-Einrichtungsanforderung und Einrichten des Pseudodrahtes.

5. Verfahren zur Verarbeitung von Dienstverkehr auf der Basis von Pseudodrähten nach Anspruch 1 oder 2, **dadurch gekennzeichnet, dass** das Verfahren zum Konfigurieren des Pseudodrahtes umfasst:
Konfigurieren, an einem Ende eines zuvor eingerichteten Pseudodrahtes, einer ersten lokalen Weiterleitungsäquivalenzklassen-Information und einer ersten "Peer"-Weiterleitungsäquivalenzklassen-Information, und Konfigurieren, am anderen Ende des Pseudodrahtes, einer zweiten lokalen Weiterleitungsäquivalenzklassen-Information;
Auslösen, durch die Vorrichtung an einem Ende des Pseudodrahtes, einer Pseudodraht-Einrichtungsanforderung, welche die erste lokale Weiterleitungsäquivalenzklassen-Information und die erste "Peer"-Weiterleitungsäquivalenzklassen-Information enthält;
Bestimmen, nachdem die Vorrichtung am anderen Ende des Pseudodrahtes die Pseudodraht-Einrichtungsanforderung empfangen hat, ob die erste "Peer"-Weiterleitungsäquivalenzklassen-Information mit der zweiten lokalen Weiterleitungsäquivalenzklassen-Information übereinstimmt, und falls ja, Annehmen der Pseudodraht-Einrichtungsanforderung und Einrichten des Pseudodrahtes.

6. Vorrichtung zur Verarbeitung von Dienstverkehr auf der Basis von Pseudodrähten, umfassend:
ein erstes Empfangsmodul (71), das dafür ausgelegt ist, Dienstverkehr von einer "Customer Edge"-Vorrichtung zu empfangen;
ein Pseudodraht-Aggregationsgruppenmodul (72), das dafür ausgelegt ist, eine Pseudodraht-Aggregationsgruppe zu bestimmen, die dem Dienstverkehr entspricht;
**dadurch gekennzeichnet, dass** die Vorrichtung ferner umfasst:
ein erstes Weiterleitungsmodul (73) das dafür ausgelegt ist, den Dienstverkehr, gemäß einer lokalen Strategie, an eine "Peer"-Vorrichtung über einen Pseudodraht im Status "Weiterleiten" in der Pseudodraht-Aggregationsgruppe weiterzuleiten, wobei die Pseudodraht-Aggregationsgruppe mehr als einen Pseudodraht aufweist, der dem Dienstverkehr entspricht, und der Pseudodraht im Status "Weiterleiten" ein Pseudodraht zwischen einer lokalen Vorrichtung und der "Peer"-Vorrichtung in der Pseudodraht-Aggregationsgruppe ist, falls ein lokaler Status der lokalen Vorrichtung ein Bereitschaftsstatus ist und ein "Peer"-Status der "Peer"-Vorrichtung ein aktiver Status ist;
wobei die Vorrichtung ferner dafür ausgelegt ist, allen Pseudodrähten in der Pseudodraht-Aggregationsgruppe, die demselben Dienstverkehr entsprechen, denselben "Incoming Label Map"-Eintrag zuzuweisen, so dass die "Peer"-Vorrichtung den Dienstverkehr von dem Pseudodraht gemäß dem "Incoming Label Map"-Eintrag empfängt.

7. Vorrichtung zur Verarbeitung von Dienstverkehr auf der Basis von Pseudodrähten nach Anspruch 6, **dadurch gekennzeichnet, dass** das Pseudodraht-Aggregationsgruppenmodul (72) umfasst:
ein Dienstinstanz-Submodul (721), das dafür ausgelegt ist, eine Dienstinstanz zu bestimmen, die dem Dienstverkehr entspricht;
ein Pseudodraht-Aggregationsgruppen-Submodul (722), das dafür ausgelegt ist, eine Pseudodraht-Aggregationsgruppe, die der Dienstinstanz entspricht, als die Pseudodraht-Aggregationsgruppe, die dem Dienstverkehr entspricht, zu bestimmen.

8. Vorrichtung zur Verarbeitung von Dienstverkehr auf der Basis von Pseudodrähten nach Anspruch 6 oder Anspruch 7, **dadurch gekennzeichnet, dass** sie ferner umfasst: ein zweites Empfangsmodul (74), das dafür ausgelegt ist, den Dienstverkehr der "Peer"-Vorrichtung über den Pseudodraht im Status "Empfangen" oder "Aktiv" in der Pseudodraht-Aggregationsgruppe zu empfangen, wobei der Pseudodraht im Status "Empfangen" ein Pseudodraht zwischen der lokalen Vorrichtung und der "Peer"-Vorrichtung in der Pseudodraht-Aggregationsgruppe ist, falls der lokale Status der lokalen Vorrichtung der aktive Status ist und der "Peer"-Status der "Peer"-Vorrichtung der Bereitschaftsstatus ist, und der Pseudodraht im Status "Aktiv" ein Pseudodraht zwischen der lokalen Vorrichtung und der "Peer"-Vorrichtung in der Pseudodraht-Aggregationsgruppe ist, falls der lokale Status der lokalen Vorrichtung der aktive Status ist und der "Peer"-Status der "Peer"-Vorrichtung der aktive Status ist;
ein zweites Weiterleitungsmodul (75) das dafür ausgelegt ist, den Dienstverkehr der "Peer"-Vorrichtung an die "Customer Edge"-Vorrichtung weiterzuleiten.

9. System zur Verarbeitung von Dienstverkehr auf der Basis von Pseudodrähten, umfassend:
eine lokale Vorrichtung (81), die dafür ausgelegt ist, Dienstverkehr von einer "Customer Edge"-Vorrichtung zu empfangen; eine Pseudodraht-Aggregationsgruppe zu bestimmen, die dem Dienstverkehr entspricht; den Dienstverkehr, gemäß einer lokalen Strategie, an eine "Peer"-Vorrichtung (82) über einen Pseudodraht im Status "Weiterleiten" in der Pseudodraht-Aggregationsgruppe weiterzuleiten, wobei die Pseudodraht-Aggregationsgruppe mehr als einen Pseudodraht aufweist, der dem Dienstverkehr entspricht, und der Pseudodraht im Status "Weiterleiten" ein Pseudodraht zwischen der lokalen Vorrichtung (81) und der "Peer"-Vorrichtung (82) in der Pseudodraht-Aggregationsgruppe ist, falls ein lokaler Status der lokalen Vorrichtung (81) ein Bereitschaftsstatus ist und ein "Peer"-Status der "Peer"-Vorrichtung (82) ein aktiver Status ist;
eine "Peer"-Vorrichtung (82), die dafür ausgelegt ist, den Dienstverkehr von der lokalen Vorrichtung (81) über den Pseudodraht im Status "Empfangen" oder "Aktiv" in der Pseudodraht-Aggregationsgruppe zu empfangen und den Dienstverkehr von der lokalen Vorrichtung (81) an eine "Customer Edge"-Vorrichtung weiterzuleiten, die mit der "Peer"-Vorrichtung (82) verbunden ist, wobei der Pseudodraht im Status "Empfangen" ein Pseudodraht zwischen der lokalen Vorrichtung (81) und der "Peer"-Vorrichtung (82) in der Pseudodraht-Aggregationsgruppe ist, falls der lokale Status der lokalen Vorrichtung (81) der aktive Status ist und der "Peer"-Status der "Peer"-Vorrichtung (82) der Bereitschaftsstatus ist, und der Pseudodraht im Status "Aktiv" ein Pseudodraht zwischen der lokalen Vorrichtung (81) und der "Peer"-Vorrichtung (82) in der Pseudodraht-Aggregationsgruppe ist, falls der lokale Status der lokalen Vorrichtung (81) der aktive Status ist und der "Peer"-Status der "Peer"-Vorrichtung (82) der aktive Status ist;
wobei die lokale Vorrichtung (81) ferner dafür ausgelegt ist, allen Pseudodrähten in der Pseudodraht-Aggregationsgruppe, die demselben Dienstverkehr entsprechen, denselben "Incoming Label Map"-Eintrag zuzuweisen, so dass die "Peer"-Vorrichtung (82) den Dienstverkehr von dem Pseudodraht gemäß dem "Incoming Label Map"-Eintrag empfängt.

## Revendications

1. Procédé de traitement d'un trafic de service à base de pseudo-fils, comprenant :
la réception (101) d'un trafic de service depuis un dispositif périphérique client ; et
la détermination (102) d'un groupe d'agrégation de pseudo-fils correspondant au trafic de service ;
**caractérisé en ce que** le procédé comprend en outre,
le transfert (103) du trafic de service, conformément à une stratégie locale, à un dispositif pair par l'intermédiaire d'un pseudo-fil à l'état de "transfert" dans le groupe d'agrégation de pseudo-fils, dans lequel le groupe d'agrégation de pseudo-fils comporte plus d'un pseudo-fil correspondant au trafic de service, et le pseudo-fil à l'état de "transfert" est un pseudo-fil entre un dispositif local et le dispositif pair dans le groupe d'agrégation de pseudo-fils si un état local du dispositif local est un état inactif et un état pair du dispositif pair est un état actif ; et
l'assignation, à tous les pseudo-fils dans le groupe d'agrégation de pseudo-fils correspondant au même trafic de service, de la même entrée de carte d'étiquette entrante, de telle sorte que le dispositif pair reçoive le trafic de service depuis le pseudo-fil conformément à l'entrée de carte d'étiquette entrante.

2. Procédé de traitement d'un trafic de service à base de pseudo-fils selon la revendication 1, **caractérisé en ce que** la détermination (102) d'un groupe d'agrégation de pseudo-fils correspondant au trafic de service comprend :
la détermination d'une instance de service correspondant au trafic de service ;
la détermination d'un groupe d'agrégation de pseudo-fils correspondant à l'instance de service comme étant le groupe d'agrégation de pseudo-fils correspondant au trafic de service.

3. Procédé de traitement d'un trafic de service à base de pseudo-fils selon la revendication 1 ou la revendication 2, **caractérisé en ce qu'**il comprend en outre :
la réception du trafic de service du dispositif pair par l'intermédiaire du pseudo-fil à l'état de "réception" ou "actif" dans le groupe d'agrégation de pseudo-fils, dans lequel le pseudo-fil dans l'état de "réception" est un pseudo-fil entre le dispositif local et le dispositif pair dans le groupe d'agrégation de pseudo-fils si l'état local du dispositif local est l'état actif et l'état pair du dispositif pair est l'état inactif, et le pseudo-fil dans l'état "actif" est un pseudo-fil entre le dispositif local et le dispositif pair dans le groupe d'agrégation de pseudo-fils si l'état local du dispositif local est l'état actif et l'état pair du dispositif pair est l'état actif ;
le transfert du trafic de service du dispositif pair au dispositif périphérique client.

4. Procédé de traitement d'un trafic de service à base de pseudo-fils selon la revendication 1 ou 2, **caractérisé en ce que** le procédé de configuration du pseudo-fil comprend :
la configuration, à une extrémité d'un pseudo-fil préétabli, d'une première information de classe d'équivalence de transfert local, la désignation du dispositif pair, et la configuration, à l'autre extrémité du pseudo-fil, d'une seconde information de classe d'équivalence de transfert local ;
le lancement, par le dispositif à une extrémité du pseudo-fil, d'une demande d'établissement de pseudo-fil qui comporte la première information de classe d'équivalence de transfert local ;
la détermination, après que le dispositif à l'autre extrémité du pseudo-fil reçoit la demande d'établissement de pseudo-fil, que la première information de classe d'équivalence de transfert local correspond ou non à la seconde information de classe d'équivalence de transfert local, et dans l'affirmative, l'acceptation de la demande d'établissement de pseudo-fil et l'établissement du pseudo-fil.

5. Procédé de traitement d'un trafic de service à base de pseudo-fils selon la revendication 1 ou 2, **caractérisé en ce que** le procédé de configuration du pseudo-fil comprend :
la configuration, à une extrémité d'un pseudo-fil préétabli, d'une première information de classe d'équivalence de transfert local et d'une première information de classe d'équivalence de transfert à un pair, et la configuration, à l'autre extrémité du pseudo-fil, d'une seconde information de classe d'équivalence de transfert local ;
le lancement, par le dispositif à une extrémité du pseudo-fil, d'une demande d'établissement de pseudo-fil qui comporte la première information de classe d'équivalence de transfert local et la première information de classe d'équivalence de transfert à un pair ;
la détermination, après que le dispositif à l'autre extrémité du pseudo-fil reçoit la demande d'établissement de pseudo-fil, que la première information de classe d'équivalence de transfert à un pair correspond ou non à la seconde information de classe d'équivalence de transfert local, et dans l'affirmative, l'acceptation de la demande d'établissement de pseudo-fil et l'établissement du pseudo-fil.

6. Dispositif de traitement d'un trafic de service à base de pseudo-fils, comprenant :
un premier module de réception (71), configuré pour recevoir un trafic de service depuis un dispositif périphérique client ;
un module de groupe d'agrégation de pseudo-fils (72), configuré pour déterminer un groupe d'agrégation de pseudo-fils correspondant au trafic de service ; **caractérisé en ce que** le dispositif comprend en outre :
une premier module de transfert (73), configuré pour transférer le trafic de service, conformément à une stratégie locale, à un dispositif pair par l'intermédiaire d'un pseudo-fil à l'état de "transfert" dans le groupe d'agrégation de pseudo-fils, dans lequel le groupe d'agrégation de pseudo-fils comporte plus d'un pseudo-fil correspondant au trafic de service, et le pseudo-fil à l'état de "transfert" est un pseudo-fil entre un dispositif local et le dispositif pair dans le groupe d'agrégation de pseudo-fils si un état local du dispositif local est un état inactif et un état pair du dispositif pair est un état actif ;
dans lequel le dispositif est configuré en outre pour assigner, à tous les pseudo-fils dans le groupe d'agrégation de pseudo-fils correspondant au même trafic de service, la même entrée de carte d'étiquette entrante, de telle sorte que le dispositif pair reçoive le trafic de service depuis le pseudo-fil conformément à l'entrée de carte d'étiquette entrante.

7. Dispositif de traitement d'un trafic de service à base de pseudo-fils selon la revendication 6, **caractérisé en ce que** le module de groupe d'agrégation de pseudo-fils (72) comprend :
un sous-module d'instance de service (721), configuré pour déterminer une instance de service correspondant au trafic de service ;
un sous-module de groupe d'agrégation de pseudo-fils (722), configuré pour déterminer un groupe d'agrégation de pseudo-fils correspondant à l'instance de service comme étant le groupe d'agrégation de pseudo-fils correspondant au trafic de service.

8. Dispositif de traitement d'un trafic de service à base de pseudo-fils selon la revendication 6 ou la revendication 7, **caractérisé en ce qu'**il comprend en outre :
un second module de réception (74), configuré pour recevoir le trafic de service du dispositif pair par l'intermédiaire du pseudo-fil à l'état de "réception" ou "actif" dans le groupe d'agrégation de pseudo-fils, dans lequel le pseudo-fil dans l'état de "réception" est un pseudo-fil entre le dispositif local et le dispositif pair dans le groupe d'agrégation de pseudo-fils si l'état local du dispositif local est l'état actif et l'état pair du dispositif pair est l'état inactif, et le pseudo-fil dans l'état "actif" est un pseudo-fil entre le dispositif local et le dispositif pair dans le groupe d'agrégation de pseudo-fils si l'état local du dispositif local est l'état actif et l'état pair du dispositif pair est l'état actif ;
un second module de transfert (75), configuré pour transférer le trafic de service du dispositif pair au dispositif périphérique client.

9. Système de traitement d'un trafic de service à base de pseudo-fils, comprenant :
un dispositif local (81), configuré pour recevoir un trafic de service depuis un dispositif périphérique client ; déterminer un groupe d'agrégation de pseudo-fils correspondant au trafic de service ; transférer le trafic de service, conformément à une stratégie locale, à un dispositif pair (82) par l'intermédiaire d'un pseudo-fil à l'état de "transfert" dans le groupe d'agrégation de pseudo-fils, dans lequel le groupe d'agrégation de pseudo-fils comporte plus d'un pseudo-fil correspondant au trafic de service, et le pseudo-fil à l'état de "transfert" est un pseudo-fil entre le dispositif local (81) et le dispositif pair (82) dans le groupe d'agrégation de pseudo-fils si un état local du dispositif local (81) est un état inactif et un état pair du dispositif pair (82) est un état actif ;
un dispositif pair (82), configuré pour recevoir le trafic de service depuis le dispositif local (81) par l'intermédiaire du pseudo-fil dans l'état de "réception" ou l'état "actif" dans le groupe d'agrégation de pseudo-fils et transférer le trafic de service du dispositif local (81) à un dispositif périphérique client connecté au dispositif pair (82), dans lequel le pseudo-fil dans l'état de "réception" est un pseudo-fil entre le dispositif local (81) et le dispositif pair (82) dans le groupe d'agrégation de pseudo-fils si l'état local du dispositif local (81) est l'état actif et l'état pair du dispositif pair (82) est l'état inactif, et le pseudo-fil dans l'état "actif" est un pseudo-fil entre le dispositif local (81) et le dispositif pair (82) dans le groupe d'agrégation de pseudo-fils si l'état local du dispositif local (81) est l'état actif et l'état pair du dispositif pair (82) est l'état actif ;
dans lequel le dispositif local (81) est configuré en outre pour assigner, à tous les pseudo-fils dans le groupe d'agrégation de pseudo-fils correspondant au même trafic de service, la même entrée de carte d'étiquette entrante, de telle sorte que le dispositif pair (82) reçoive le trafic de service depuis le pseudo-fil conformément à l'entrée de carte d'étiquette entrante.
